Europäisches Patentamt

European Patent Office

Office européen des brevets

(11) Publication number: 0 280 409
A1

## EUROPEAN PATENT APPLICATION

(21) Application number: 88300739.5

(22) Date of filing: 28.01.88

(51) Int. Cl.4: H02J 7/00 , F21L 9/00

(30) Priority: 28.01.87 GB 8701878

(43) Date of publication of application:
31.08.88 Bulletin 88/35

(84) Designated Contracting States:
AT BE DE FR GB IT NL SE

(71) Applicant: Combined Optical Industries
Limited
200 Bath Road
Slough Berkshire SL1 4DW(GB)

(72) Inventor: Roote, Robert John
20 Amersham Hill Drive
High Wycombe Buckinghamshire(GB)
Inventor: Smithers, Ian John
79 Hag Hill Rise Taplow
Nr. Maidenhead Berkshire(GB)
Inventor: Pasco, Ian Kenneth
The Nook Cocks Lane
Warfield Berkshire SL1 4DW(GB)
Inventor: Fisher, Paul James
56 Dawesmoor Close
Slough Berkshire SL2 5RN(GB)

(74) Representative: Wain, Christopher Paul et al
A.A. THORNTON & CO. Northumberland
House 303-306 High Holborn
London WC1V 7LE(GB)

(54) Alternative source system.

(57) An alternative source system to supply electrical power to a load comprises a switch (2) to control operation of the load (1), first contact means (3,4) adapted to receive conventional battery means, second contact means (3,7) adapted to receive rechargeable cell means, a disconnectable connector to supply external power, e.g. from a mains fed transformer, all being connectable to load through said switch (2). Connection of said connector acts to prevent flow to or from said first contact means (3,4) and enables power to be supplied from said connector either to said load (1) or to said second contact means (3,7), determined by the position of said switch (2). Preferably said first and second contact means share one common terminal contact (3), whereby the battery means can only be either conventional or rechargeable.

## ALTERNATIVE SOURCE SYSTEM

The present invention relates to an alternative source system to supply electrical power to a load.

It is commonplace to supply electrical power to a load by means of batteries. These have the disadvantage that they run down and so that, after a period of time, they can no longer be used. In order to overcome this problem, there are available nowadays, often as direct replacements for standard batteries, nickel cadmium (NICAD) cells which are rechargeable. When they are exhausted, they are removed from the appliance, placed in a charger and recharged. They may then reinserted into the appliance, which is again ready for use. These have the obvious disadvantage that the appliance cannot be used when the batteries are being recharged, unless the user maintains a spare set of batteries to be used in rotation. Since such rechargeable batteries are expensive, this is a course of action not often favoured.

Another alternative is to fit an appliance with a rechargeable battery or batteries which are not interchangeable with conventional batteries. In this case, when the appliance is not in use it can be connected to a recharging power source, often contained in a holder especially adapted for the appliance. This arrangement suffers from the disadvantage as above that the appliance is out of action while being recharged and also that the rechargeable batteries cannot be replaced by standard batteries.

Standard batteries cannot be recharged. If, for any reason, it is attempted, there is a danger of the battery exploding.

It is an object of the present invention to provide a system which allows the user a choice of standard batteries or rechargeable batteries and in which the rechargeable batteries can be recharged in situ.

According to the present invention there is provided an alternative source system to supply electrical power to a load, comprising a switch to control operation of the load, first contact means adapted to receive conventional battery means, second contact means adapted to receive rechargeable cell means, a disconnectable connector to supply external power, e.g. from a mains fed transformer, all being connectable to load through said switch, wherein connection of said connector acts to prevent flow to or from said first contact means and enables power to be supplied from said connector either to said load or to said second contact means, determined by the position of said switch.

Preferably said first and second contact means share one common terminal contact, whereby the battery means can only be either conventional or rechargeable.

Advantageously said first contact means are connected to said load by at least one additional switch, normally closed but opened by contact by said connector.

The load may be a lamp.

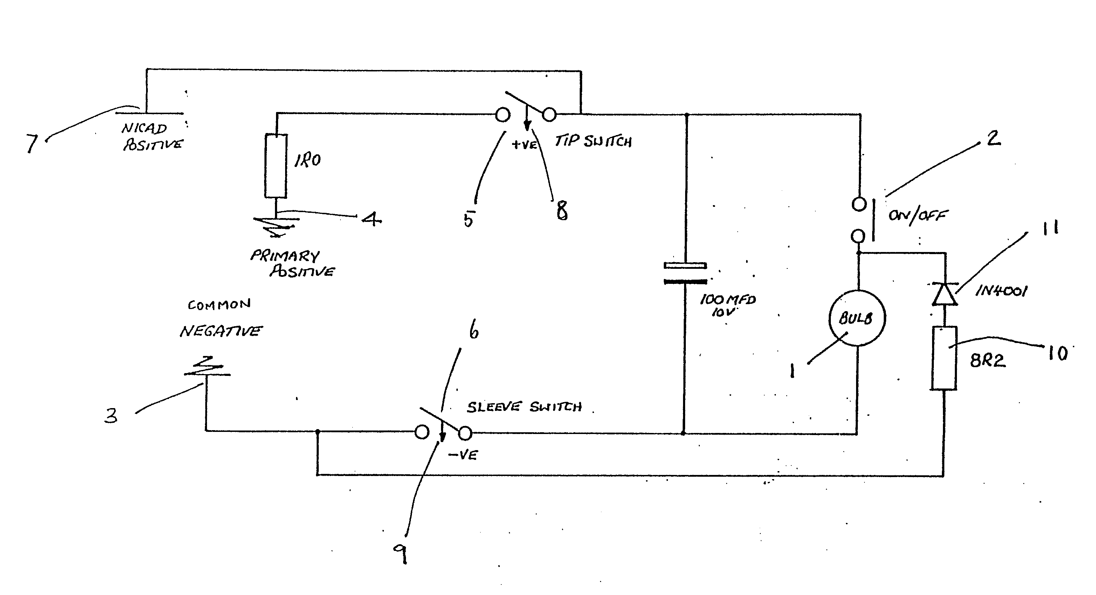

An embodiment of the present invention will now be more particularly described by way of example and with reference to the accompanying drawing, the single figure of which is a schematic circuit diagram of a system embodying the invention.

Referring now to the drawing, a circuit is shown in which the load is a lamp 1. The lamp may, of course, be replaced by any other suitable load such as a motor, clock, logic circuit or the like. Operation of the lamp 1 is effected by switch 2 at the discretion of the user.

When a conventional battery is inserted between the common negative terminal 3 and positive terminal 4, power is fed to the lamp 1 through two normally closed switches 5 and 6.

If the conventional battery is replaced by a rechargeable battery using the common negative terminal 3, and a second positive terminal 7, power is again fed to the lamp under the control of switch 2.

A third option for power supply is transformed mains power, fed to the appliance by means of a jack-plug insertable in a socket on the exterior of the appliance housing. The socket is connected to the system by a positive terminal 8 and a negative terminal 9. When switch 2 is closed, again power flows directly through the lamp 1.

Insertion of the jack-plug into the socket opens the two normally closed switches 5 and 6, preferably the tip of the jack-plug causing switch 5 to open and the sleeve of the jack-plug causing switch 6 to open. Thus, once the jack-plug is inserted, even if a conventional battery is present in the appliance, it is totally disconnected. As stated above, when switch 2 is closed, current flows between connections 8 and 9 and the bulb is illuminated. When switch 2 is opened, it is still possible for current to flow between 8 and 9, but this time via current limiting resistor 10 and rechargeable battery terminals 3 and 7. Thus, if a rechargeable battery is present, it is recharged. Since terminal 4 of a conventional battery is isolated by open switch 5, there is no leakage of current to a conventional battery, and thus it cannot be charged with the possible danger of explosion.

When the jack-plug is withdrawn, switches 5 and 6 are closed, and the lamp may be operated from whichever battery is in position.

Diode 11 is provided to prevent any discharge of the rechargeable battery back into the circuit. The rechargeable cells used with the above apparatus preferably are provided with a positive contact at a point along the side rather than the conventional end contact.

As can be seen, the system provides power to the lamp 1 or other load from any one of three sources at the discretion of the user. The appliance can be used intermittently during the recharging process, which can take place without the need to remove the cell from the appliance. If the user mislays the rechargeable cell and cannot afford a replacement, conventional batteries may be used. Alternatively, the appliance may be used at all times fed by transformed mains power.

## Claims

1. An alternative source system to supply electrical power to a load, characterised in that it comprises a switch (2) to control operation of the load (1), first contact means (3,4) adapted to receive conventional battery means, second contact means (3,7) adapted to receive rechargeable cell means, a disconnectable connector to supply external power, e.g. from a mains fed transformer, all being connectable to load through said switch (2), wherein connection of said connector acts to prevent flow to or from said first contact means (3,4) and enables power to be supplied from said connector either to said load (1) or to said second contact means (3,7), determined by the position of said switch (2).

2. A system as claimed in claim 1, characterised in that said first and second contact means share one common terminal contact (3), whereby the battery means can only be either conventional or rechargeable.

3. A system as claimed in either claim 1 or claim 2, characterised in that said first contact means (3,4) are connected to said load by at least one additional switch (6), normally closed but opened by contact by said connector.

4. A system as claimed in any one of the preceding claims, characterised in that the load (1) is a lamp.

NICAD POSITIVE

7

1R0

+VE  TIP SWITCH

5

8

PRIMARY POSITIVE

2

ON/OFF

11

1N4001

COMMON NEGATIVE

4

3

6

SLEEVE SWITCH

-VE

9

100 MFD 10V

BULB

1

8R2

10

0 280 409

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 081 531 (LUCAS INDUSTRIES LTD) * Page 1, line 50 - page 2, line 24; figures 1,2 * | 1,3,4 | H 02 J 7/00 F 21 L 9/00 |
| A | GB-A-2 077 525 (J.O.M. JENKINS) * Page 2, line 61 - page 3, line 35; figures 1-4 * | 1-4 | |
| A | DE-A-2 117 257 (CEAG DOMINIT AG) * Claims 1-3; figures 1,2 * | 1 | |
| A | US-A-4 282 562 (J. MARINO) * Column 2, line 1 - column 3, line 11; figures 1,4 * | 1 | |

TECHNICAL FIELDS
SEARCHED (Int. Cl.4)

F 21 L
H 02 J

The present search report has been drawn up for all claims

| Place of search | Date of completion of the search | Examiner |
|---|---|---|
| THE HAGUE | 12-04-1988 | FOURRICHON,P.M.L. |